# EUROPEAN PATENT APPLICATION

(11) **EP 1 677 075 A1**
(43) Date of publication of application: **05.07.2006**
(21) Application number: 04791973.3
(22) Date of filing: 01.10.2004
(51) Int. Cl.: G01C 21/00, G08G 1/0969

(54) **NAVIGATION DEVICE, NAVIGATION METHOD, AND PROGRAM**

(30) Priority: 21.10.2003 JP 2003360356
(71) Applicant: Navitime Japan Co., Ltd., Tokyo 101-0051 (JP)
(72) Inventor: KIKUCHI, Shin, c/o NAVITIME JAPAN CO., LTD., Tokyo 1010054 (JP); ONISHI, Keisuke, c/o NAVITIME JAPAN CO., LTD., Tokyo 1010054 (JP); SUZUKI, Yusuke, c/o NAVITIME JAPAN CO., LTD., Tokyo 1010054 (JP)
(74) Representative: HOFFMANN EITLE
(86) International application number: PCT/JP2004/014506
(87) International publication number: WO 2005/038400

(57) **Abstract**

The navigation apparatus (100) includes a route-search-result obtaining unit (140) that obtains a search result for a route to travel from a departure point to a destination. A route search is conducted with the designated departure point and destination. If a user instructs, while the result of the route search is displayed on the display unit (110), that a re-routing search in which another location point is designated as a departure point should be conducted, the route-search-result obtaining unit (140) transmits, to a navigation server (300), a re-routing search request in which the designated location point is specified as the departure point and the destination included in the initial route search criteria is specified as the arrival point and obtains a result of the re-routing search.

## Description

### TECHNICAL FIELD

The present invention relates to a navigation apparatus and a method and a program for navigation for displaying a result of a route search on a display unit.

### BACKGROUND ART

In a navigation apparatus like a car navigation apparatus, the processing for navigating a user is performed by searching for an appropriate route to travel from a departure point to a destination and displaying a result of the search on a display screen. Some navigation apparatuses like this have a re-routing function (For example, see Patent Document 1).

The re-routing function is, in the event that a current position of the apparatus obtained using a positioning means such as a global positioning system (GPS) or the like has deviated from a route found in a search, to automatically search again for a route to reach the destination from the current location point. This re-routing function is convenient because it enables the user to automatically obtain the search result for the route to travel from the current location point to the destination even if he/she deviates from the route found in the initial search.

Patent Document 1: Japanese Patent Application Laid-Open No. H8-159797

### DISCLOSURE OF INVENTION

### PROBLEM TO BE SOLVED BY THE INVENTION

Because the re-routing function is configured so that a search is conducted again when a current position of the apparatus obtained using a GPS or the like has deviated from the route, the re-routing function does not work to search for another route when it is not possible to obtain the current position of the apparatus using a GPS or the like, for example, when the apparatus is located in a tunnel or in an underground mall. In addition, when it is possible to obtain the current position of the apparatus with the operation of a GPS or the like, if a user chooses to take a side trip out of the route found in the search (for example, to a shop the location of which is known to the user), the conventional re-routing function detects the side trip as a deviation from the route and conducts a re-routing search, which is unnecessary.

In view of these problems, the present invention aims to provide a navigation apparatus and a method and a program for navigation that, after conducting a search for a route from a departure point to a destination, conducts a re-routing search for a route from a desired location point to the destination, at a time when it is necessary.

### MEANS FOR SOLVING PROBLEM

To solve the above problems, and to achieve the goal, a navigation apparatus according to one aspect of the present invention includes a display unit that displays a route search result; a memory unit that stores route search criteria including a destination; and a route-search-result obtaining unit that obtains, when a route search instruction including a designated location is received while the route search result is displayed on the display unit, the route search result with the designated location as a departure point and the destination included in the route search criteria stored in the memory unit as an arrival point.

A navigation method of displaying a route search result on a display unit, according to another aspect of the present invention includes obtaining, when a route search instruction including a designated location is received while the route search result is displayed on the display unit, the route search result with the designated location as a departure point and a destination used for a route search displayed on the display unit as an arrival point.

A computer program according to still another aspect of the present invention causes a computer of a navigation apparatus that including a display unit that displays a route search to execute obtaining, when a route search instruction including a designated location is received while the route search result is displayed on the display unit, the route search result with the designated location as a departure point and a destination used for a route search displayed on the display unit as an arrival point.

### EFFECT OF THE INVENTION

According to the present invention, an effect is achieved where after a search for a route from a departure point to a destination is conducted, a re-routing search is conducted for a route from a desired location point to the destination, at a time when it is necessary.

### BRIEF DESCRIPTION OF DRAWINGS

Fig. 1 is a block diagram of the overall configuration of a network system that includes a navigation apparatus according to an embodiment of the present invention;
Fig. 2 is a schematic view of an operating unit of the navigation apparatus;
Fig. 3 is a drawing for explaining a transition on a display screen observed when direction buttons included in the operating unit is operated;
Fig. 4 is a flow chart of the procedure performed by the navigation apparatus to obtain a result of a route search from a navigation server;
Fig. 5 is a drawing of an example of a list of results of a route search displayed on a display unit of the navigation apparatus;
Fig. 6 is a flow chart of the procedure in the processing performed by the navigation apparatus when the direction buttons are operated;
Fig. 7 is a drawing of an example of a screen to be displayed on the display unit of the navigation apparatus when the direction buttons are operated;
Fig. 8 is a drawing of another example of a screen to be displayed on the display unit of the navigation apparatus when the direction buttons are operated;
Fig. 9 is a drawing of another example of a screen to be displayed on the display unit of the navigation apparatus when the direction buttons are operated;
Fig. 10 is a drawing of an example of a sub-menu displayed on the display unit of the navigation apparatus;
Fig. 11 is a flow chart of the procedure in the re-routing search result obtaining processing performed by the navigation apparatus when a re-routing search instruction that includes a designation of a location point is received; and
Fig. 12 is a drawing of an example in which a result of a re-routing search obtained through the re-routing search processing is displayed.

### EXPLANATIONS OF LETTERS OR NUMERALS

100: navigation apparatus
- 110:: display unit
- 111:: audio output unit
- 112:: audio input unit
- 114:: GPS
- 115:: communicating unit
- 116:: operating unit
- 116a:: ten-key pad
- 116b:: direction buttons
- 117:: control unit
- 130:: display control unit
- 140:: route-search-result obtaining unit
- 150:: map-data obtaining unit
- 160:: memory
- 200:: network
- 300:: navigation server
- 310:: map distributing unit
- 320:: map database
- 330:: route searching unit

### BEST MODE(S) FOR CARRYING OUT THE INVENTION

Exemplary embodiments of a navigation apparatus, a navigation method, and a navigation program according to the present invention will be explained in detail with reference to the accompanying drawings.

### Embodiment

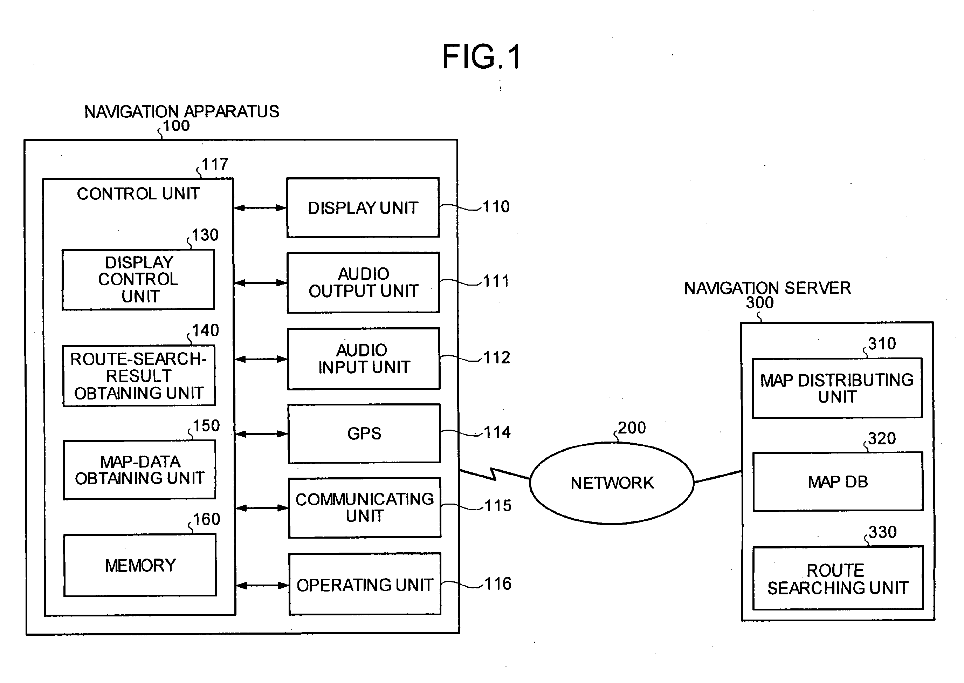

Fig. 1 is a block diagram of the overall configuration of a network system that includes a navigation apparatus according to an embodiment of the present invention. As shown in the drawing, the network system includes a navigation apparatus 100, a network 200, and a navigation server 300.

The network 200 is a network like a mobile phone network or the Internet. Via the network 200, various kinds of data are transmitted and received between the navigation apparatus 100 and the navigation server 300.

The navigation apparatus 100 according to the present embodiment is a portable navigation apparatus that has functions of a mobile phone and includes a display unit 110, an audio output unit 111, an audio input unit 112, a global positioning system (GPS) 114, a communicating unit 115, an operating unit 116, and a control unit 117.

The display unit 110 includes an LCD (Liquid Crystal Display) or the like and displays various types of information including maps, based on display data supplied by the control unit 117. In addition, on the display unit 110, a result of a route search, which is obtained from the navigation server 300 described later, for a route between a staring point and a destination may be displayed. According to the present embodiment, the result of the route search is presented to a user by displaying the roads and the like on the map that correspond to a route found in the search in a manner different from the manner in which other roads are displayed. For example, the lines of the roads found in the search may be in bold, or the roads may be shown in a different color.

The audio output unit 111 includes a speaker and outputs audio, based on the audio data supplied by the control unit 117. The audio input unit 112 includes a microphone, generates audio data that corresponds to the sound made by a user or the like, and outputs the generated audio data to the control unit 117. The audio input unit 112 and the audio output unit 111 may be used for inputting the audio from the user or the like, when the navigation apparatus 100 is used as a phone. Also, the audio output unit 111 may be used to provide, audio guidance or the like, to notify the user at which location or in which direction a turn should be made during a navigation process.

The GPS 114 includes a GPS antenna or the like and outputs position information based on information received from a satellite, to the control unit 117. The communicating unit 115 may be an antenna having a configuration similar to a communicating unit of a general mobile phone and transmits and receives, under the control of the control unit 117 , various kinds of data including audio data, map data, and route search results to and from other communicating terminals (like mobile phones and Web servers) via the network 200, which serves as a mobile phone network.

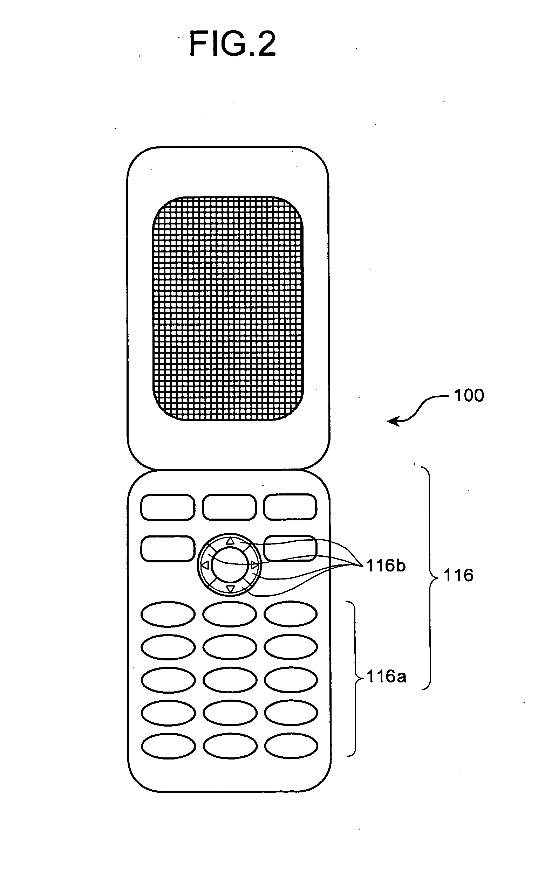

The operating unit 116 includes an input means like a ten-key pad, generates an operation signal according to an operation by a user, and outputs the generated operation signal to the control unit 117. Fig. 2 is a drawing of an example of a configuration of the input means included in the operating unit 116. As shown in the drawing, the operating unit 116 includes a ten-key pad 116a and direction buttons 116b to specify the directions, namely, up, down, right, and left.

While a map is displayed on the display unit 110, the direction buttons 116b are used for moving the position of a cursor displayed on the map. More specifically, by operating each of the direction buttons 116b corresponding to different directions, the user can move the cursor displayed on the map toward any direction that corresponds to the operated one of the direction buttons.

The control unit 117 has a memory unit that includes a CPU (Central Processing Unit), a ROM (Read Only Memory), a RAM (Random Access Memory), and the like. The control unit 117 controls the navigation apparatus 100 as a whole by executing a program stored in the memory unit. In other words, the control unit 117 controls the elements included in the navigation apparatus 100 so that the navigation apparatus 100 functions as a mobile phone as described above.

In addition, the control unit 117 included in the navigation apparatus 100 according to the present embodiment controls the elements included in the navigation apparatus 100 to achieve navigation functions such as displaying maps and providing guidance. To be more specific, the control unit 117 includes function units such as a display control unit 130, a route-search-result obtaining unit 140, a map-data obtaining unit 150, and a memory 160.

The display control unit 130 generates map display data for displaying a map, based on map data that is distributed by the navigation server 300 and obtained by the map-data obtaining unit 150 and causes the display unit 110 to display an image based on the map display data. Also, the display control unit 130 generates other pieces of display data for causing the display unit 110 to display various types of other information.

More specifically, the display control unit 130 generates display data for causing the display unit 110 to display a result of a route search obtained by the route-search-result obtaining unit 140. According to the present embodiment, the result of the route search is displayed on the display unit 110 so that, among different roads on a map, the route (i.e. roads) indicated in the result of the route search is displayed in a manner different from the manner in which other roads and the like are displayed.

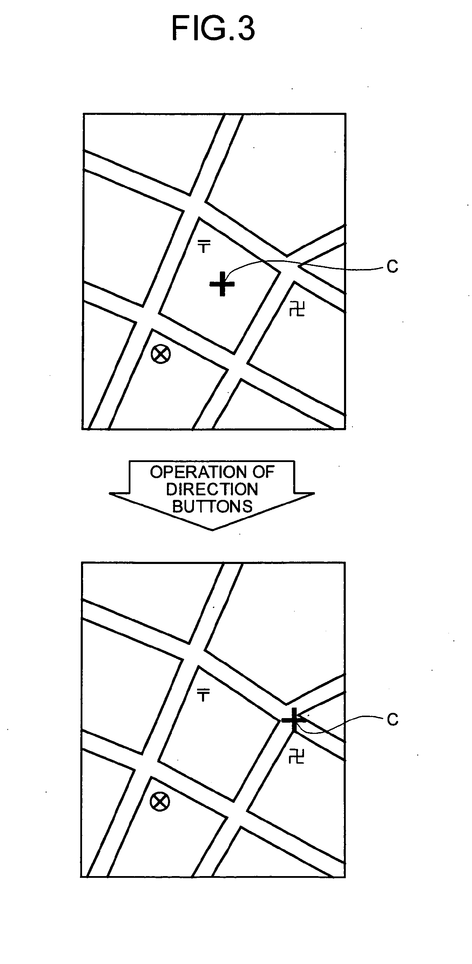

When the direction buttons 116b included in the operating unit 116 are operated while a map is displayed based on map data, the display control unit 130 has a cursor C displayed on the map, as shown in the upper portion of Fig. 3, and subsequently moves the position of the cursor on the map according to the operation by a user. For example, when the direction button for the right is operated, the cursor C is displayed at the center of the displayed map at the beginning of the operation, and, as shown in the lower portion of Fig. 3, the cursor C is moved toward the right on the map while the direction button for the right is being operated. To the cursor display technique in this example, the technique disclosed in the Japanese Unexamined Patent Application Publication No. 2003-208095 may be applied.

With reference to Fig. 1 again, the map-data obtaining unit 150 accesses the navigation server 300 via the communicating unit 115 and the network 200 and requests that map data used for displaying a map on the display unit 110 should be transmitted. More specifically, when a map including a current location point is going to be displayed, the map-data obtaining unit 150 regularly obtains information indicating a current location point from the GPS 114 and transmits, to the navigation server 300, a distribution request that includes the information indicating the current location point and that requests map data should be distributed. The map-data obtaining unit 150 obtains the map data supplied by the navigation server 300 in response to the distribution request and supplies the obtained map data to the display control unit 130. Thus, displaying of the map is realized.

The map-data obtaining unit 150 makes no distribution request when map data including the current location point has already been distributed. The map-data obtaining unit 150 makes no distribution request only when no map data including the current location point is available.

The route-search-result obtaining unit 140 transmits, to the navigation server 300, a route search request that includes information required in a route search, for example, a departure point (the current location point may be automatically used as the departure point, or the user may input a departure point), a destination, and other search criteria (e.g. the preference for routes that require shorter times, routes that cost less, etc.). The route-search-result obtaining unit 140 obtains a result of the route search transmitted by the navigation server 300 in response to the route search request and supplies the obtained route search result to the display control unit 130, and the like.

When having made such a route search request, the route-search-result obtaining unit 140 stores the route search criteria (the departure point, the destination, and other criteria such as the preference for routes that require shorter times, routes that cost less, or routes that require less walking, etc.) into the memory 160. If the user inputs a route search instruction that includes a designation of a location point via the operating unit 116 while a result of a route search is displayed on the display unit 110, the route-search-result obtaining unit 140 transmits, to the navigation server 300, a route search request in which the designated location point is specified as the departure point, and the destination included in the route search criteria stored in the memory 160 is specified as the arrival point. The route-search-result obtaining unit 140 obtains a result of the route search transmitted by the navigation server 300 in response to the route search request and supplies the obtained route search result to the display control unit 130 and the like. Accordingly, the route found in the search this time is displayed on the display unit 110.

Thus completes the description of the configuration of the navigation apparatus 100. Next, the navigation server 300 will be explained. The navigation server 300 includes a map distributing unit 310 , a map database (DB) 320, and a route searching unit 330.

The map database 320 is a database in which pieces of map data are accumulated. When having received a distribution request from the navigation apparatus 100 (or any other navigation apparatus), the map distributing unit 310 obtains, out of the map database, a piece of map data that includes a location point indicated in the current location point information included in the distribution request and transmits the obtained piece of map data to the navigation apparatus 100, which has made the distribution request, via the network 200.

When having received a route search request from the navigation apparatus 100, the route searching unit 330 searches for a route from the departure point to the destination, both of which are specified in the route search request, so that the route satisfies the search criteria included in the route search request. The route searching unit 330 then transmits a route search result to the navigation apparatus 100, which has made the route search request, via the network 200.

As described above, the route searching unit 330 included in the navigation server 300 according to the present embodiment searches for the most appropriate route to travel from a departure point to a destination by combining, as necessary, a plurality of kinds of means of travel including traveling on foot and public transportation such as trains and buses. For the technique for conducting a route search in which various means of travel are used in combination like in this example, a technique disclosed in Japanese Patent Application Laid-Open No. 2000-258184 may be applied.

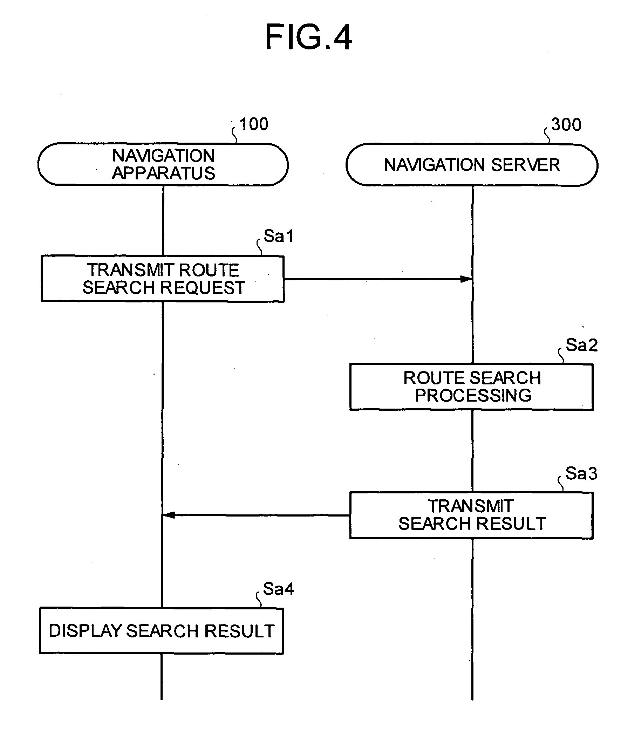

Thus completes the description of the configuration of the network system that includes the navigation apparatus 100 and the navigation server 300 according to the present embodiment. Next, the operations that are performed by the navigation apparatus 100 and the navigation server 300 when a navigation method including a re-routing search is implemented using the navigation apparatus 100 will be explained with reference to Fig. 4 through Fig. 12.

Firstly, as shown in Fig. 4, a user instructs that a route search request should be made by inputting search criteria including a departure point and a destination to the navigation apparatus 100 via the operating unit 116.
Accordingly, the navigation apparatus 100 transmits a route search request including the input search criteria such as the departure point and the destination to the navigation server 300 via the network 200 (step Sa1). At this time, the search criteria including the destination are stored in the memory 160.

Having received the route search request from the navigation apparatus 100, the navigation server 300 conducts a route search according to the search criteria included in the route search request (step Sa2) and transmits a result of the route search to the navigation apparatus 100 via the network 200 (step Sa3). As described above, when a departure point and a destination are specified, the navigation server 300 conducts a search for a route combining sections of a route in each of which a different type of means of travel is used, for example, walking and a bus, or walking and a train. Thus, the navigation server 300 transmits the result of the route search.

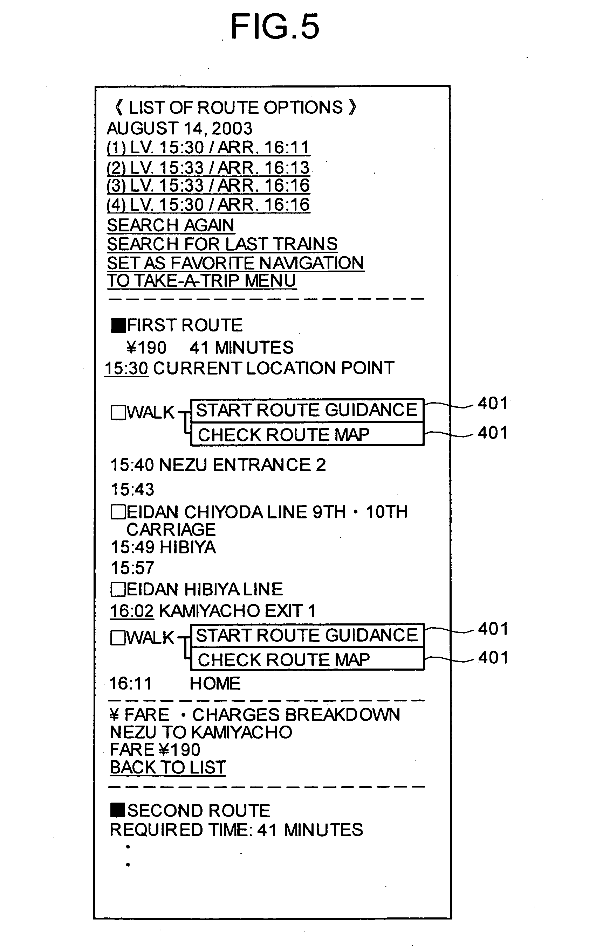

When the navigation apparatus 100 has received the distribution of the result of the route search, a list of options found as the result of the route search are displayed on the display unit 110 (step Sa4). Fig. 5 is a drawing of an example of options shown as a result of the route search displayed on the display unit 110 included in the navigation apparatus 100. As shown in the drawing, in this example, four route options (for example, one route option is leaving at 15:30 and arriving at 16:11; another route option is leaving at 15:33 and arriving at 16:13) are displayed in a list as the result of the route search, and the details of each of the route options are also displayed.

This drawing shows what will be displayed on a screen regardless of whether the size of the display screen of the navigation apparatus 100 is big enough to display all of the information. In other words, when the size of a display screen is smaller than the one shown in this example in the drawing, the user needs to scroll the screen to see all of the information displayed.

The first route shown in the example in the drawing is to travel from the departure point to the destination on foot → by subway → on foot. To be more specific, the first route is made up of four sections as follows: (1) a section on foot (from the current location point to Entrance 2 of Nezu Station) ; (2) a section by the Subway Chiyoda Line (from Nezu Station to Hibiya Station) ; (3) a section by the Subway Hibiya Line (from Hibiya Station to Kamiyacho Station) ; and (4) a section on foot (from Exit 1 of Kamiyacho Station to home, i.e. the destination). The details of each of the sections are displayed.

When the details of the route made up of the four sections (1) to (4) as in this example are displayed, for sections (1) and (4) that involve walking, soft buttons 401 that read "start the route guidance" and "check the route map" are displayed. Clicking the soft buttons 401 by operating the operating unit 116 included in the navigation apparatus 100, the user can input instructions such as to "start the route guidance" and to "check the route map".

When the "start the route guidance" button 401 is clicked, the control unit 117 included in the navigation apparatus 100 starts the guidance for the route corresponding to the clicked button 401. The control unit 117 included in the navigation apparatus 100 according to the present embodiment causes the display unit 110 to display a map that includes a current location point obtained by the GPS 114 and provides guidance by displaying the roads on the map indicated in the result of the route search in a manner different from the manner in which other roads are displayed. In addition to this type of guidance with the display of the route on the map, it is acceptable to provide guidance by notifying the user of an intersection where a turn should be made by audio, or the like, when the user approaches the intersection.

For example, if the user deviates from the route, the navigation apparatus 100 according to the present embodiment allows the user to make a re-routing search with a designation of a desired departure point and at a time desired by the user, while the navigation as described above including the display of the route based on the result of the route search is performed. In the following section, the processing to be performed for conducting a re-routing search will be explained.

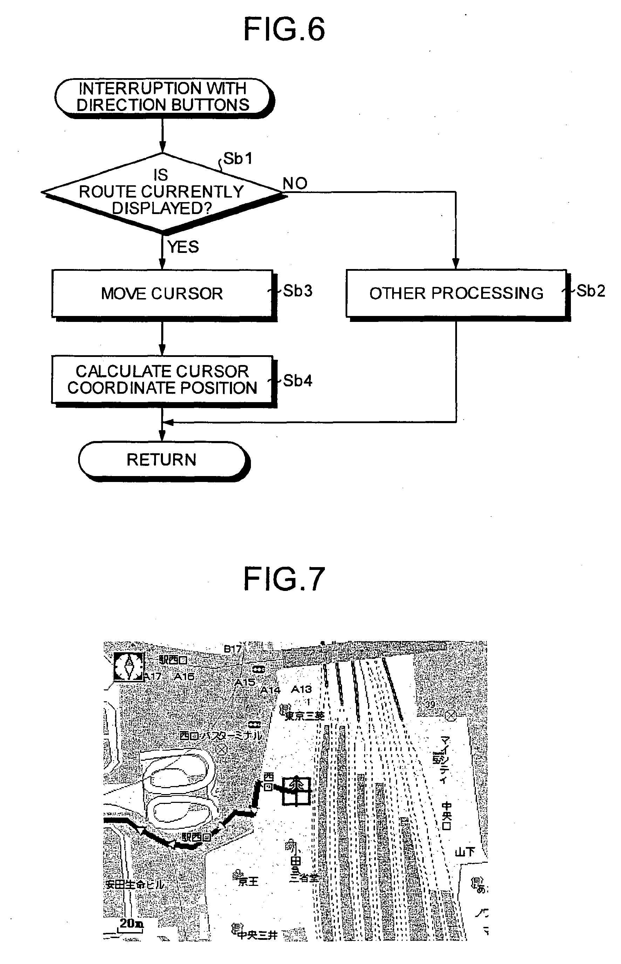

To conduct a re-routing search, it is necessary to designate a departure point. The navigation apparatus 100 allows the user to designate a location point with the operation of the direction buttons 116b. Firstly, the operation of the navigation apparatus 100 to be performed when the direction buttons 116b are operated will be explained, with reference to Fig. 6.

As shown in the drawing, when the direction buttons 116b included in the operating unit 116 are operated, the control unit 117 judges whether a result of a route search is currently displayed on the display unit 110 to provide route guidance (step Sb1).

When no route is currently displayed (step Sb1: No), a processing that is in correspondence with the operation of the direction buttons 116b and is in compliance with the situation will be performed (step Sb2). For example, when the button for the down direction is operated while a list of telephone numbers, or the like, stored in an address memory of the navigation apparatus 100 including mobile phone functions is displayed on the display unit 110, a processing of scrolling the displayed list downward will be performed.

On the other hand, if a route is currently displayed after, for example, the button reading "start the route guidance" has been clicked, the control unit 117 has a cursor displayed on the map and performs the processing of moving the cursor in a direction and by a distance according to the operation performed on the direction buttons 116b (step Sb3) .

After the cursor is moved on the displayed map according to the operation performed on the direction buttons 116b in this manner, the control unit 117 calculates, by computation, coordinates (e.g. the latitude and the longitude) of the position of the cursor on the map after the move (step Sb4) .

As descried above, when the direction buttons 116b are operated while a route is displayed, when the direction buttons 116b are operated while a route is displayed, the cursor is displayed on the map according to the operation.

For example, when a search is conducted for a route to travel from home (from which the closest station is a station other than Shinjuku Station), which is specified as the departure point, to the Tokyo Metropolitan Government Building, which is specified as the arrival point, the route found in the search suggests traveling home → the closest station → train → Shinjuku Station (West Exit) → the Tokyo Metropolitan Government Building. On an assumption that this route based on the search result is currently displayed, if the user is located near Shinjuku Station, a route to travel from the west exit of Shinjuku Station to the Tokyo Metropolitan Government Building will be displayed, as shown in Fig. 7 (the route is shown with a bold line). In this situation, when the direction buttons 116b are operated, a cursor will be displayed at first.

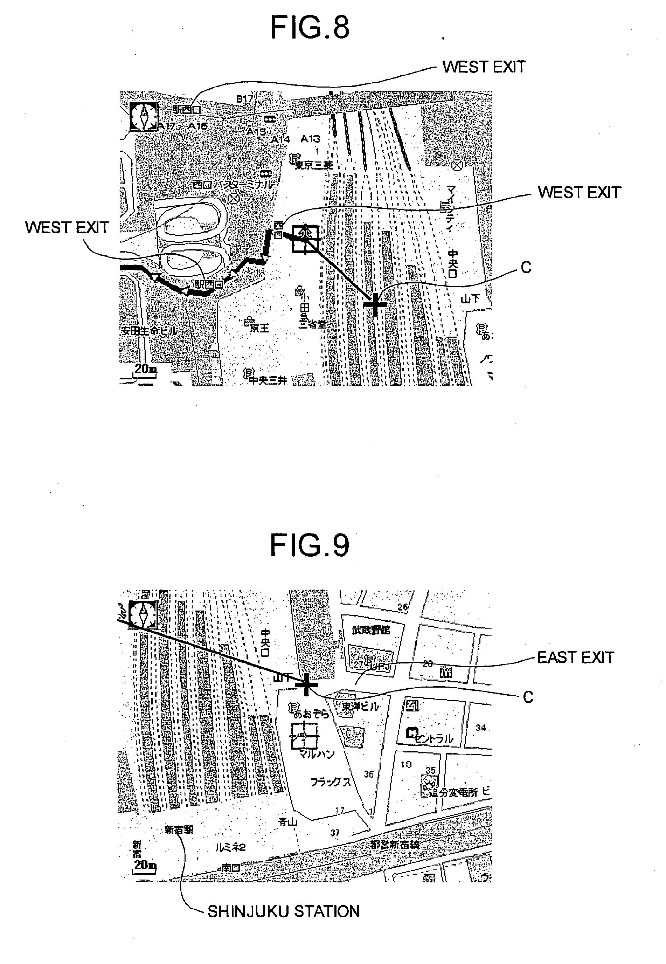

At this point, by operating the direction buttons 116b, the user can designate a departure point to be used in a re-routing search. For example, if the user wants to designate the east exit of Shinjuku Station as a departure point, operating the buttons for the right direction and the down direction will move the cursor C, which is currently displayed at the west exit of Shinjuku Station as shown in Fig. 7, diagonally to the lower right, as shown in Fig. 8 and Fig. 9, so that the cursor C is positioned at the east exit of the Shinjuku Station as shown in Fig. 9.

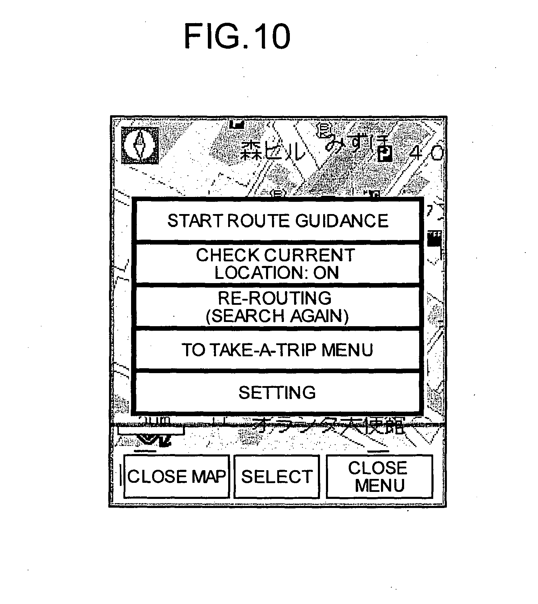

When the user clicks on a sub-menu button (not shown; a soft button or the like) while the designated location point (the east exit of Shinjuku Station in this example) is indicated on the map due to the operation of the direction buttons 116b, the control unit 117 causes the display unit 110 to display a sub-menu screen as shown in Fig. 10. When the user selects the "Re-routing search" from the sub-menu by operating the operating unit 116 as necessary, a re-routing search instruction that includes the departure point is input.

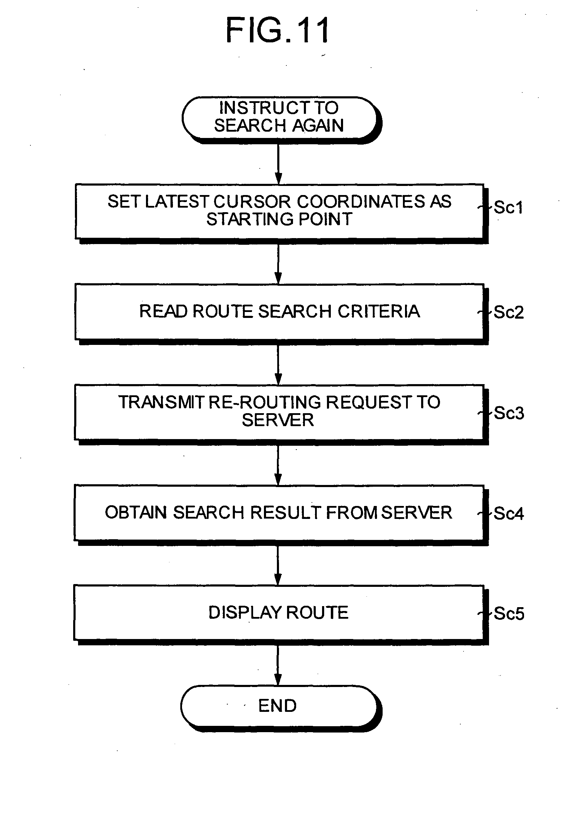

Next, the operation performed by the navigation apparatus 100 after the re-routing search instruction has been input as described above will be explained, with reference to Fig. 11. When the re-routing search instruction is input, the route-search-result obtaining unit 140 included in the control unit 117 obtains the position (coordinates) on the map of the location point indicated with the cursor C and sets the coordinates as the departure point (step Sc1). The route-search-result obtaining unit 140 then reads the rest of the route search criteria other than the departure point (i.e. the destination and the other criteria) from the memory 160

### (step Sc2).

The route-search-result obtaining unit 140 transmits, to the navigation server 300 via the network 200, a re-routing search request in which the departure point indicated by the cursor position and the rest of the route search criteria other than the departure point stored in the memory 160 are specified as the search criteria (step Sc3). The route-search-result obtaining unit 140 then obtains a result of the route search transmitted by the navigation server 300 in response to the re-routing search request (step Sc4).

Having obtained the re-routing search result, the route-search-result obtaining unit 140 supplies the re-routing search result to the display control unit 130. Accordingly, a map that includes the re-routing search result that is supplied by the display control unit 130 this time is displayed on the display unit 110 (step Sc5). In other words, of the roads shown on the map, the road that has been found in the search this time is displayed in a manner different from the manner in which other roads are displayed (e.g. the road is shown with a bold line, or in a different color).

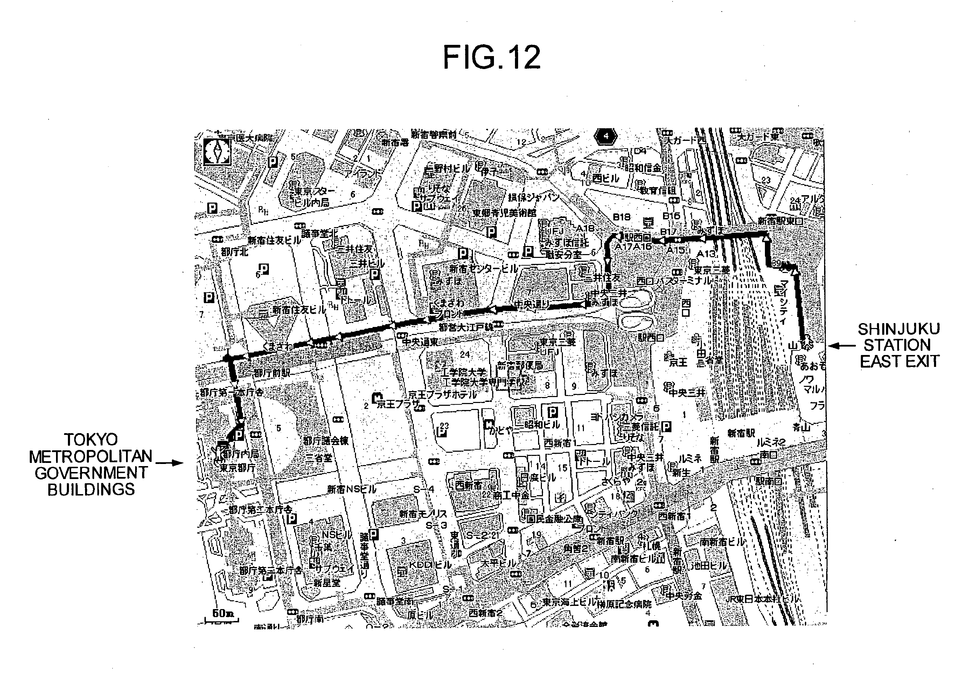

When the re-routing search designating the east exit of Shinjuku Station is instructed while the route from the west exit of Shinjuku Station to the Tokyo Metropolitan Government Building is displayed based on the initial route search result, the re-routing search processing as shown in Fig. 11 is performed. Consequently, as shown in Fig. 12, a search result for a route to travel from the east exit of Shinjuku Station, which is the designated location point, to the Tokyo Metropolitan Government Building, which is initially specified as the arrival point, is displayed on the map.

As explained so far, according to the present embodiment, a route search is conducted based on specified search criteria including a departure point and a destination, and if the user instructs, while the route based on the search result is displayed, a re-routing search designating a selected location point, a search for a route from the designated location point to the initially-specified destination is conducted again, and the result of the search is displayed. This arrangement allows the user to obtain the search result of the route that starts from the location point from where route guidance is needed and at a time when the route guidance is needed.

Further, the search criteria used when the initial route search request is made are stored in the memory 160. As described above, by inputting an instruction with a designation of a selected location point that a search should be conducted again, the destination and the other search criteria are read from the memory 160 and automatically set as the criteria for the search. Thus, there is no need to perform operation for inputting and setting the destination and the other criteria, and this arrangement allows the user to instruct the re-routing search easily. In short, the arrangement according to the present embodiment allows the user to obtain a search result of a route that starts from a location point where route guidance is needed, at a time when the route guidance is needed, with simple operation.

Furthermore, according to the present embodiment, when designating a selected location point as a departure point, the user can make the designation by moving the cursor position on the map with the operation of the direction buttons 116b. With this arrangement, the operation for designating the location point is easy, and the operation required for instructing the re-routing search is also easy.

As explained so far, according to the present embodiment, the re-routing search is conducted easily from a location point where the route guidance is needed and at a time when the route guidance is needed. Next, effects that are achieved because this type of re-routing search is made possible will be explained with specific examples.

When a portable navigation apparatus like the navigation apparatus 100 according to the present embodiment is used, the owner of the apparatus may be in an area where GPS reception is not possible, for example, in an underground mall. In such a situation, according to the conventional re-routing search function, because it is not possible to find out the current position of the apparatus, it is not possible to judge whether the apparatus has deviated from the route, and therefore no re-routing search will be conducted.
Consequently, to conduct a re-routing search when the position of the apparatus has deviated from the initial route (i.e. the route found in the initial search), it is necessary to input the route search criteria, as in a normal route search, and start the route search all over again.

On the contrary, according to the present embodiment, because it is possible to conduct a re-routing search with a designation of a selected location point, even if the user is in an area (e.g. an underground mall) from where the positioning means such as the GPS cannot obtain the position of the apparatus, it is possible to conduct the re-routing search, as long as the user knows where the apparatus position is, by using the apparatus position as the designated location point. In the example described above, when the user is on the premises of Shinjuku Station, it is easy to find out if he/she is at the east exit or the west exit by looking at a sign board or the like. Accordingly, if the user is supposed to go out of the station through the west exit according to the route found in the initial search, but he/she has gone out of the station through the east exit by mistake, the user can instruct a re-routing search by specifying the east exit as the designated location point. It is very convenient because another route search will be conducted from the designated location point to the destination, and the result of the route search will be displayed.

The re-routing search processing that is possible according to the present embodiment is convenient not only when the user is in an area from where the positioning means cannot obtain the apparatus position but also when the user takes a side trip to a place the location of which is known to the user (for example, to a shop that is not on the route found in the search) on the way from the departure point to the destination specified in the initial route search.

More specifically, a search is conducted for a route to travel from departure point A to final destination B, and as a result, a route is found in the search: departure point A → location point C → location point D → destination B. If the user wishes to take a side trip to location point E that is not on the route connecting location point D and location point B, (and the user knows the route to travel from location point D to location point E), when the user instructs a re-routing search with a designation of location point E, a search will be conducted for a route to travel from location point E to final destination B. With this arrangement, no search will be conducted for the unnecessary route that the user knows and for which no guidance is required. A search will be conducted for only the necessary route that the user does not know.

In contrast, according to the conventional re-routing search function, when the user takes a side trip from location point D to location point E, it is detected that the user has deviated from the route, and a search will be conducted for a route to travel from that location to the location point B. This route search is unnecessary because the route the user really needs to find out is not the route to travel from that location to location point B, but the route to travel from location point E to location point B. Especially, when the navigation apparatus is of a type that transmits a route search request to the navigation server 300 via the network 200, like in the present embodiment, if an unnecessary search is conducted like in this example, an unnecessary communication fee will incur.

Needless to say, it is possible to avoid an unwanted re-routing search by including location point E as a place to take a side trip to, in the initial route search. In other words, a route search could be conducted by specifying search criteria to travel from location point A to location point B via location point E. However, when the user wishes to take side trips to a plurality of location points, the manual operation becomes complicated. In addition, when the user did not intend to take a side trip at the beginning, this method cannot take care of the situation. On the contrary, according to the present embodiment, even if the user decides to take a side trip after arriving at location point D, he/she can instruct that a search should be conducted again only for the route that is needed at that point in time (i.e. the route from location point E to location point B).

### Modification Examples

The present invention is not limited to the embodiment described above. It is possible to modify the present invention in various ways.

### Modification Example 1

According to the present embodiment, the cursor position on a map is moved with the operation of the direction buttons 116b, so that the departure point in the re-routing search is indicated by the cursor position. However, the method of designating the departure point is optional, and it is acceptable to use any configuration as long as it is possible for the user to designate a selected location point. For example, to designate a departure point, the user may input text information that reads, for example, "Shinjuku Station East Exit".

### Modification Example 2

According to the present embodiment, when the re-routing search request is made, the route search criteria other than the departure point are used as they are in the initial search.
However, as long as the re-routing search request includes at least the destination specified in the search criteria for the' initial search, it is acceptable not to use the rest of the search criteria other than the destination. Further, another arrangement is also acceptable in which the user specifies in advance which ones of the search criteria for the initial search will be used in a re-routing search so that only those specified search criteria are used in the re-routing search.

### Modification Example 3

According to the present embodiment, the navigation apparatus 100 has the mobile phone functions and obtains the map data, the result of the route search, and the like by communicating with the navigation server 300 via the network 200. It is acceptable, however, to configure the navigation apparatus so as to include a memory unit that stores therein map data and a route search processing unit that performs the route search processing, so that the navigation apparatus has capability of obtaining the map data and performing the route search processing by itself. For example, it is possible to apply the present invention to a car navigation apparatus.

Modification Example 4 According to the present embodiment, the CPU included in the control unit executes the processing including the re-routing search, according to a program stored in the memory unit such as the ROM; however, another arrangement is acceptable in which a program for having a computer execute the processing is provided for a user via a communication line such as the Internet. Also, another arrangement is acceptable in which such a program is provided for a user as being recorded on a computer-readable recording medium like a CD-ROM (Compact Disc - Read Only Memory). Further, another arrangement is acceptable in which the navigation apparatus is configured to be realized with a hardware circuit exclusively used for performing the processing and is supplied for a user.

### INDUSTRIAL APPLICABILITY

As described above, the navigation apparatus and the method and the program for navigation according to the present invention are useful particularly in application to portable navigation apparatuses.

## Claims

1. A navigation apparatus comprising:
a display unit that displays a route search result;
a memory unit that stores route search criteria including a destination; and
a route-search-result obtaining unit that obtains, when a route search instruction including a designated location is received while the route search result is displayed on the display unit, the route search result with the designated location as a departure point and the destination included in the route search criteria stored in the memory unit as an arrival point.

2. The navigation apparatus according to claim 1, further comprising:
an operating unit for moving a cursor position on a map displayed on the display unit, wherein
when the route search instruction in which the cursor position is specified as the designated location is received, the route-search-result obtaining unit obtains the route search result with the cursor position as the departure point and the destination included in the route search criteria stored in the memory unit as the arrival point.

3. The navigation apparatus according to claim 1 or 2, wherein
when the route search instruction including the designated location is received while the route search result is displayed on the display unit, the route-search-result obtaining unit obtains the route search result based on the route search criteria stored in the memory unit.

4. The navigation apparatus according to any one of claims 1 to 3, wherein
when the route search instruction including the designated location is received, the route-search-result obtaining unit transmits a request for a route search with the designated location as the departure point and the destination included in the route search criteria stored in the memory unit as the arrival point to a route search server via a network, and obtains the route search result transmitted from the route search server in response to the request.

5. A navigation method of displaying a route search result on a display unit, the navigation method comprising:
obtaining, when a route search instruction including a designated location is received while the route search result is displayed on the display unit, the route search result with the designated location as a departure point and a destination used for a route search displayed on the display unit as an arrival point.

6. A computer program for causing a computer of a navigation apparatus that including a display unit that displays a route search to execute:
obtaining, when a route search instruction including a designated location is received while the route search result is displayed on the display unit, the route search result with the designated location as a departure point and a destination used for a route search displayed on the display unit as an arrival point.
